# EUROPÄISCHE PATENTSCHRIFT

(11) **EP 4 676 766 B1**
(45) Veröffentlichungstag und Bekanntmachung des Hinweises auf die Patenterteilung: **28.10.2026**
(21) Anmeldenummer: 24704171.8
(22) Anmeldetag: 08.02.2024
(51) Int. Cl.: B60L 5/00, B60L 5/42, B60L 53/38, B60L 53/124, B60L 50/60, B60L 53/36, B60L 5/14, B66F 7/06

(54) **TRANSPORTFAHRZEUG**
TRANSPORT VEHICLE
VÉHICULE DE TRANSPORT

(30) Priorität: 07.03.2023 CN 202310215390; 27.04.2023 DE 102023001708
(43) Veröffentlichungstag der Anmeldung: 14.01.2026
(73) Patentinhaber: SEW-EURODRIVE GmbH & Co. KG, 76646 Bruchsal (DE)
(72) Erfinder: WEIHUA, Ren, Tianjin (CN)
(86) Internationale Anmeldenummer: PCT/EP2024/053222
(87) Internationale Veröffentlichungsnummer: WO 2024/184010

(56) Entgegenhaltungen:
- EP-A1- 2 719 653
- WO-A1-2012/058466
- JP-A- 2006 264 966
- JP-A- H06 217 404
- US-A1- 2017 080 815
- US-A1- 2018 194 239

## Beschreibung

Die Erfindung betrifft ein Transportfahrzeug zum Transport von Gegenständen, welches einen Grundrahmen, eine Mehrzahl von Rädern zur Bewegung des Transportfahrzeugs auf einem Boden, eine Antriebseinheit zum Antrieb der Räder und eine Empfangseinheit zur induktiven Aufnahme von Energie umfasst.

Aus der Druckschrift DE 10 2020 002 676 B3 ist ein gattungsgemäßes Transportfahrzeug zum Transport von Gegenständen bekannt. Das Transportfahrzeug weist mehrere Räder, eine Antriebseinheit zum Antrieb der Räder und einen elektrischen Energiespeicher auf. Das Transportfahrzeug weist ferner eine Empfangseinheit auf, zu welcher Energie induktiv von einer Ladeeinheit, insbesondere von einem linienförmigen Leiter, übertragbar ist. Die zu der Empfangseinheit induktiv übertragene Energie dient beispielsweise zum Laden eines elektrischen Energiespeichers des Transportfahrzeugs.

Die Ladeeinheit befindet sich üblicherweise in einem Boden, auf welchem sich das Transportfahrzeug bewegt. Zur induktiven Übertragung von Energie von der Ladeeinheit zu der Empfangseinheit ist ein verhältnismäßig kleiner Abstand zwischen der Ladeeinheit und der Empfangseinheit erforderlich. Wenn sich auf dem Boden Hindernisse, beispielsweise Steine, befinden, so können diese beim Überfahren mit der Empfangseinheit kollidieren. Dadurch kann die Empfangseinheit beschädigt werden.

Aus der US 2017/0140603 A1 ist ein Fahrzeug bekannt, welches eine Empfangseinheit zur induktiven Aufnahme von Energie aufweist. Das Fahrzeug umfasst auch eine Hubvorrichtung, mittels welcher die Empfangseinheit in Vertikalrichtung bewegbar ist.

Aus der CN 114801794 A ist ein autonomes Fahrzeug bekannt, welches eine drahtlose Ladevorrichtung umfasst. Die Ladevorrichtung ist mittels einer Hubvorrichtung in Vertikalrichtung beweglich.

Aus der DE 10 2016 120 693 A1 ist ein Flurförderzeug mit einem eine Traktionsbatterie aufweisenden batterie-elektrischen Antriebssystem und mit einer Sekundärspulenplatte einer induktiven Ladevorrichtung zum Laden der Traktionsbatterie des Flurförderzeugs bekannt.

Aus der DE 20 2020 101 068 U1 ist ein drahtloses Ladesystem für ein Fahrzeug bekannt. Das Ladesystem umfasst einen drahtlosen Leistungsempfänger und einen drahtlosen Leistungssender. Der Leistungsempfänger und der Leistungssender sind relativ zueinander bewegbar.

Aus der CN 106740167 A ist ein drahtloses Ladesystem für ein Elektrofahrzeug bekannt. Das Ladesystem umfasst eine Empfangsplatte, die mittels eine Hubvorrichtung, die ein Scherengestell aufweist, bewegbar ist.

Aus der DE 10 2012 022 479 A1 ist ein Transportfahrzeug mit einer Sekundärwicklung zur induktiven Aufnahme von Energie bekannt. Die Sekundärwicklung ist an einer Oberseite des Fahrzeugs angeordnet.

Aus der DE 10 2021 004 855 A1 ist eine Hubvorrichtung für ein Transportfahrzeug bekannt. Die Hubvorrichtung umfasst ein Scherengestell mit einem Paar von ersten Schwingen und einem Paar von zweiten Schwingen.

Aus der US 2018/0194239 A1 ist ein Fahrzeug bekannt, welches eine Empfangseinheit zur induktiven Aufnahme von Energie aufweist. Die Empfangseinheit ist dabei in eine Vertikalrichtung bewegbar.

Aus der WO 2012/058466 A1 sind ein System und ein Verfahren zur drahtlosen Übertragung von Energie bekannt.

Aus der JP H06 217404 A ist ein Schienenfahrzeug bekannt, welches eine Empfangseinheit zur induktiven Aufnahme von Energie aufweist.

Aus der US 2017/0080815 A1 sind ein System zur induktiven Übertragung von Energie und ein Verfahren zum Betrieb des Systems bekannt.

Aus der EP 2 719 653 A1 ist ein motorisch in vertikaler Richtung höhenverstellbarer Hubtisch zur Verwendung im Karosseriebau der Kfz-Industrie bekannt.

Aus der JP 2006 264966 A ist eine Hubvorrichtung bekannt. Die Hubvorrichtung umfasst einen Motor und ein Getriebe.

Der Erfindung liegt die Aufgabe zugrunde, ein Transportfahrzeug zum Transport von Gegenständen weiterzubilden.

Die Aufgabe wird erfindungsgemäß durch ein Transportfahrzeug mit den in Anspruch 1 angegebenen Merkmalen gelöst. Vorteilhafte Ausgestaltungen und Weiterbildungen sind Gegenstand der Unteransprüche.

Ein erfindungsgemäßes Transportfahrzeug zum Transport von Gegenständen umfasst einen Grundrahmen, eine Mehrzahl von Rädern zur Bewegung des Transportfahrzeugs auf einem Boden, eine Antriebseinheit zum Antrieb der Räder und eine Empfangseinheit zur induktiven Aufnahme von Energie. Zusätzlich umfasst das Transportfahrzeug eine Hubvorrichtung, mittels welcher die Empfangseinheit relativ zu dem Grundrahmen in eine Vertikalrichtung bewegbar ist.

Wenn der Boden eben und frei von Hindernissen ist, wird die Empfangseinheit in eine untere Endposition bewegt und befindet sich dort in unmittelbarer Nähe des Bodens über einer Ladeeinheit. Dort ist die Empfangseinheit mit der Ladeeinheit induktiv gekoppelt, und Energie ist von der Ladeeinheit zu der Empfangseinheit übertragbar. Die Hubvorrichtung gestattet, die Empfangseinheit anzuheben, also von dem Boden in Vertikalrichtung weg zu bewegen, wenn ein Hindernis, beispielsweise ein Stein erkannt wird. Dadurch sind Kollisionen und Beschädigungen der Empfangseinheit vermeidbar. Die Sicherheit beim Betrieb des Transportfahrzeugs wird dadurch erhöht, und die Ausfallrate wird gesenkt.

Erfindungsgemäß weist die Hubvorrichtung einen Oberrahmen und einen Unterrahmen auf. Dabei ist der Unterrahmen verschiebefest mit dem Grundrahmen verbunden, und der Oberrahmen ist verschiebefest mit der Empfangseinheit verbunden.

Erfindungsgemäß weist die Hubvorrichtung ein Scherengestell auf. Das Scherengestell umfasst ein Paar von ersten Schwingen und ein Paar von zweiten Schwingen, welche sich an einer Scherenachse kreuzen und um die Scherenachse schwenkbar sind. Das Scherengestell ist derart ausgebildet, dass durch eine Schwenkbewegung der ersten Schwingen relativ zu den zweiten Schwingen um die Scherenachse ein Abstand des Oberrahmens zu dem Unterrahmen in der Vertikalrichtung sich ändert.

Erfindungsgemäß weist die Hubvorrichtung eine Bodenplatte auf, welche verschiebefest mit dem Oberrahmen und mit der Empfangseinheit verbunden ist. Dabei ist der Unterrahmen in der Vertikalrichtung zwischen der Bodenplatte und dem Oberrahmen angeordnet.

Erfindungsgemäß weist die Hubvorrichtung mehrere Führungsstangen auf, welche sich in die Vertikalrichtung erstrecken und mit dem Oberrahmen und mit der Empfangseinheit verschiebefest verbunden sind. Dabei ist der Unterrahmen entlang der Führungsstangen in die Vertikalrichtung bewegbar. Die Führungsstangen bilden eine Linearführung für den Unterrahmen in Vertikalrichtung.

Gemäß einer bevorzugten Ausgestaltung der Erfindung weist die Hubvorrichtung einen Elektromotor auf, welcher die ersten Schwingen relativ zu den zweiten Schwingen um die Scherenachse schwenkt.

Gemäß einer bevorzugten Ausgestaltung der Erfindung ist der Unterrahmen in der Vertikalrichtung unter dem Oberrahmen angeordnet. Der Unterrahmen ist in der Vertikalrichtung also zwischen dem Boden und dem Oberrahmen angeordnet.

Gemäß einer bevorzugten Ausgestaltung der Erfindung ist der Oberrahmen in der Vertikalrichtung über dem Grundrahmen angeordnet. Der Grundrahmen ist in der Vertikalrichtung also zwischen dem Boden und dem Oberrahmen angeordnet.

Gemäß einer bevorzugten Ausgestaltung der Erfindung umfasst das Transportfahrzeug einen elektrischen Energiespeicher zur Versorgung der Antriebseinheit und der Hubvorrichtung, welcher von der Empfangseinheit mit elektrischer Energie versorgbar ist.

Gemäß einer bevorzugten Ausgestaltung der Erfindung ist das Transportfahrzeug als autonom fahrendes Transportfahrzeug ausgebildet und umfasst eine Steuereinrichtung zur Steuerung der Antriebseinheit und der Hubvorrichtung.

Gemäß einer bevorzugten Ausgestaltung der Erfindung umfasst das Transportfahrzeug einen Sensor zur Erkennung von Hindernissen auf einem Boden, auf welchem das Transportfahrzeug sich bewegt. Bei Erkennung eines Hindernisses auf einem vorgesehenen Fahrweg des Transportfahrzeugs sendet der Sensor ein Warnsignal an die Steuereinrichtung.

Die Erfindung wird durch den Umfang der Ansprüche definiert.

Die Erfindung wird nun anhand von Abbildungen näher erläutert. Die Erfindung ist nicht auf die in den Abbildungen dargestellten Ausführungsbeispiele beschränkt. Die Abbildungen stellen den Gegenstand der Erfindung nur schematisch dar. Es zeigen: .
- Figur 1:: eine perspektivische Darstellung einer Hubvorrichtung,
- Figur 2:: eine Seitenansicht der Hubvorrichtung und
- Figur 3:: eine schematische Seitenansicht eines Transportfahrzeugs.

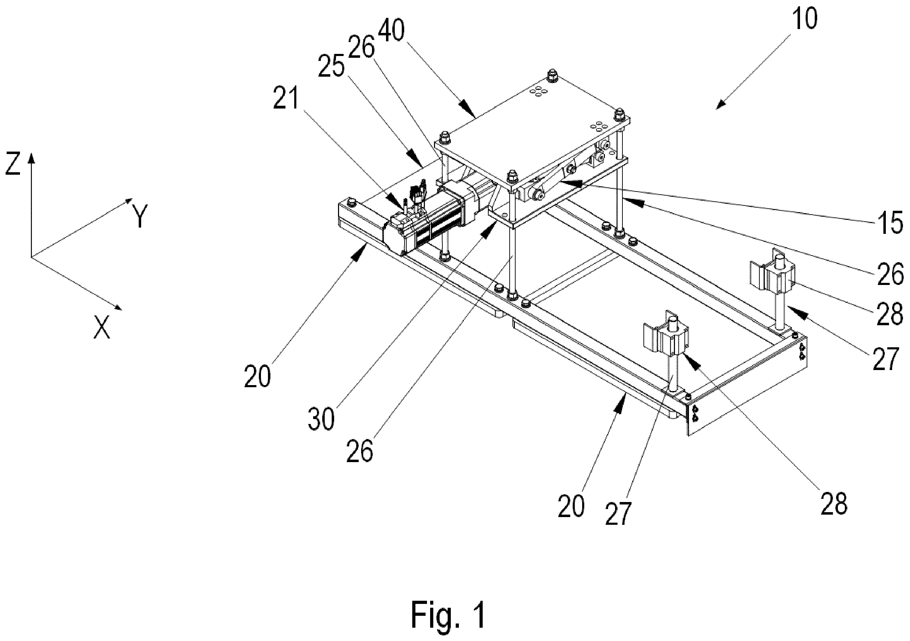

Figur 1 zeigt eine perspektivische Darstellung einer Hubvorrichtung 10 für ein Transportfahrzeug. Die Hubvorrichtung 10 weist einen Oberrahmen 40, einen Unterrahmen 30 und ein Scherengestell 15 auf. Mittels des Scherengestells 15 ist der Oberrahmen 40 relativ zu dem Unterrahmen 30 in eine Vertikalrichtung Z beweglich. Eine Querrichtung Y verläuft rechtwinklig zu der Vertikalrichtung Z. Eine Längsrichtung X verläuft rechtwinklig zu der Vertikalrichtung Z und rechtwinklig zu der Querrichtung Y.

Das Scherengestell 15 umfasst beidseitig je ein Paar von ersten Schwingen und ein Paar von zweiten Schwingen. Die ersten Schwingen und die zweiten Schwingen kreuzen sich an einer Scherenachse. Die Scherenachse, welche sich in die Längsrichtung X erstreckt, verbindet die beiden Kreuzungspunkte der Schwingen. Die ersten Schwingen sind relativ zu den zweiten Schwingen um die Scherenachse schwenkbar.

Durch eine Schwenkbewegung der ersten Schwingen relativ zu den zweiten Schwingen um die Scherenachse ändert sich ein Abstand des Oberrahmens 40 zu dem Unterrahmen 30 in der Vertikalrichtung Z. Die Hubvorrichtung 10 weist einen Elektromotor 21 auf, welcher die ersten Schwingen relativ zu den zweiten Schwingen um die Scherenachse schwenkt.

Die Hubvorrichtung 10 weist eine Bodenplatte 25 auf. An der Bodenplatte 25 ist eine Empfangseinheit 20 angeordnet. Die Bodenplatte 25 ist mit der Empfangseinheit 20 verschiebefest verbunden. Der Unterrahmen 30 ist in der Vertikalrichtung Z zwischen der Bodenplatte 25 und dem Oberrahmen 40 angeordnet.

Die Hubvorrichtung 10 weist mehrere, vorliegend vier, Führungsstangen 26 auf, welche sich in die Vertikalrichtung Z erstrecken. Die Führungsstangen 26 sind mit dem Oberrahmen 40 und mit der Bodenplatte 25 verschiebefest verbunden. Somit ist die Bodenplatte 25 mit dem Oberrahmen 40 verschiebefest verbunden. Die Führungsstangen 26 sind somit auch mit der Empfangseinheit 20 verschiebefest verbunden. Somit ist auch der Oberrahmen 40 verschiebefest mit der Empfangseinheit 20 verbunden.

Der Unterrahmen 30 ist entlang der Führungsstangen 26 relativ zu dem Oberrahmen 40 und der Bodenplatte 25 in die Vertikalrichtung Z bewegbar. Die Führungsstangen 26 durchragen den Unterrahmen 30. Wenn der Elektromotor 21 die ersten Schwingen relativ zu den zweiten Schwingen um die Scherenachse schwenkt, so wird der Unterrahmen 30 entlang der Führungsstangen 26 relativ zu dem Oberrahmen 40 und der Bodenplatte 25 in die Vertikalrichtung Z bewegt.

Die Hubvorrichtung 10 weist auch zwei Führungsbolzen 27 auf, welche sich ebenfalls in die Vertikalrichtung Z erstrecken. Die Führungsbolzen 27 sind mit der Bodenplatte 25 verschiebefest verbunden. Die Führungsbolzen 27 sind somit auch mit der Empfangseinheit 20 verschiebefest verbunden. Die Führungsbolzen 27 sind jeweils in einem Anschlagelement 28 linear beweglich geführt und relativ zu dem Anschlagelement 28 in die Vertikalrichtung Z bewegbar.

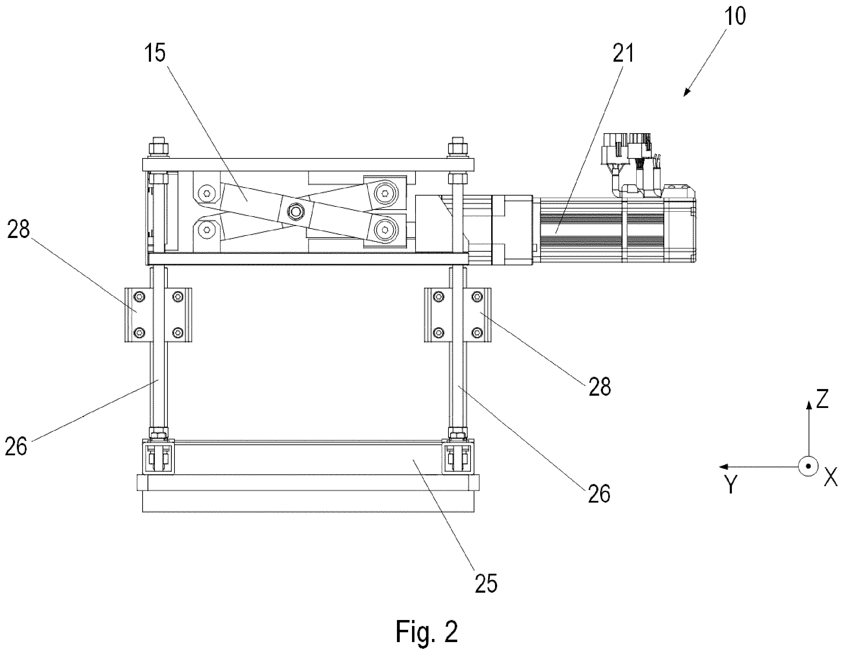

Figur 2 zeigt eine Seitenansicht der Hubvorrichtung 10. Der Elektromotor 21, welcher die ersten Schwingen relativ zu den zweiten Schwingen um die Scherenachse schwenkt, ist in Querrichtung versetzt zu dem Scherengestell 15 angeordnet. Der Elektromotor 21 ist dabei an dem Unterrahmen 30 befestigt.

Die ersten Schwingen sind an ihrem in Querrichtung Y hinteren Ende mittels eines ersten unteren Querrohrs, welches sich in Längsrichtung X erstreckt, miteinander verbunden. Mittels des ersten unteren Querrohrs sind die ersten Schwingen jeweils an ihrem in Querrichtung Y hinteren Ende an dem Unterrahmen 30 angelenkt und relativ zu dem Unterrahmen 30 schwenkbar.

Die ersten Schwingen sind an ihrem in Querrichtung Y vorderen Ende mittels eines ersten oberen Querrohrs, welches sich in Längsrichtung X erstreckt, miteinander verbunden. Um das erste obere Querrohr sind Rollen drehbar gelagert. Mittels der besagten Rollen ist das erste obere Querrohr mit den ersten Schwingen an dem Oberrahmen 40 in Querrichtung Y beweglich geführt.

Die zweiten Schwingen sind an ihrem in Querrichtung Y hinteren Ende mittels eines zweiten oberen Querrohrs, welches sich in Längsrichtung X erstreckt, miteinander verbunden. Mittels des zweiten oberen Querrohrs sind die zweiten Schwingen jeweils an ihrem in Querrichtung Y hinteren Ende an dem Oberrahmen 40 angelenkt und relativ zu dem Oberrahmen 40 schwenkbar.

Die zweiten Schwingen sind an ihrem in Querrichtung Y vorderen Ende mittels eines zweiten unteren Querrohrs, welches sich in Längsrichtung X erstreckt, miteinander verbunden. Um das zweite untere Querrohr sind Rollen drehbar gelagert. Mittels der besagten Rollen ist das zweite untere Querrohr mit den zweiten Schwingen an dem Unterrahmen 30 in Querrichtung Y beweglich geführt.

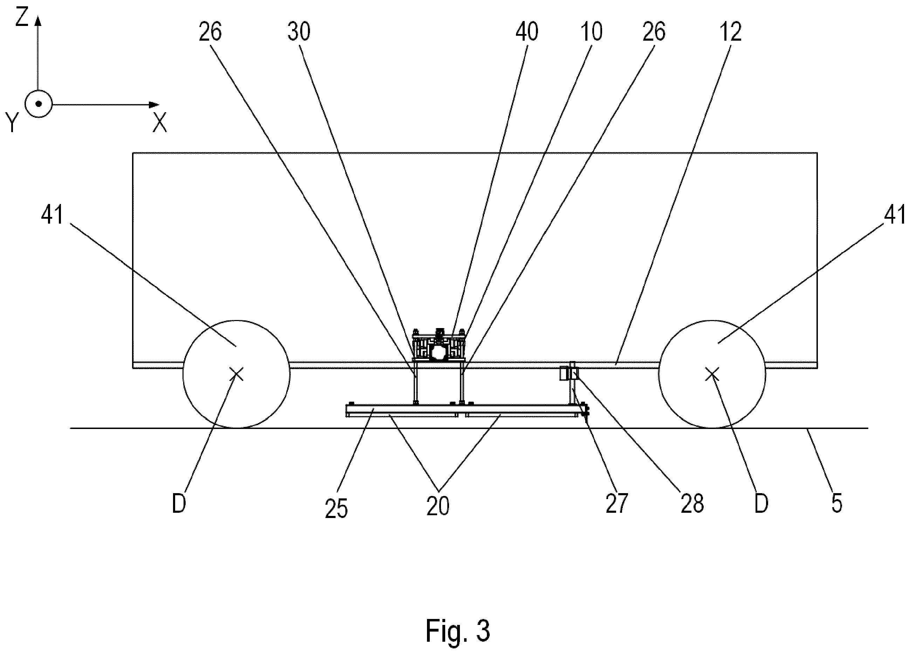

Figur 3 zeigt eine schematische Seitenansicht eines Transportfahrzeugs. Das Transportfahrzeug dient zum Transport von Gegenständen. Bei dem Transportfahrzeug handelt es sich vorliegend um ein autonom fahrendes Fahrzeug. In der hier gezeigten Darstellung befindet sich das Transportfahrzeug auf einem ebenen Boden 5.

Das Transportfahrzeug umfasst einen Grundrahmen 12. Der Grundrahmen 12 weist einen annähernd rechteckförmigen Querschnitt auf und erstreckt sich vorwiegend in die Längsrichtung X und in die Querrichtung Y. Die Längsrichtung X entspricht dabei zumindest annähernd der gewöhnlichen Fahrtrichtung des Transportfahrzeugs.

Die Längsrichtung X und die Querrichtung Y stellen horizontale Richtungen dar und verlaufen parallel zu dem Boden 5, auf welchem sich das Transportfahrzeug befindet. Jede Richtung rechtwinklig zu der Vertikalrichtung Z stellt eine horizontale Richtung dar. Die Vertikalrichtung Z steht senkrecht auf dem ebenen Boden 5.

Das Transportfahrzeug umfasst mehrere Räder 41, welche relativ zu dem Grundrahmen 12 drehbar sind. Mittels der Räder 41 ist das Transportfahrzeug auf dem Boden 5 bewegbar. Vorliegend umfasst das Transportfahrzeug zwei vordere Räder 41, die in Querrichtung Y versetzt zueinander angeordnet sind, und zwei hintere Räder 41, die in Querrichtung Y versetzt zueinander angeordnet sind. Die vorderen Räder 41 sind zu den hinteren Rädern 41 in Längsrichtung X versetzt angeordnet.

Wenn das Transportfahrzeug in der gewöhnlichen Fahrtrichtung, also in Längsrichtung X, fährt, drehen die Räder 41 um Drehachsen D, die in die Querrichtung Y verlaufen. Wenn das Transportfahrzeug eine Kurve fährt, so werden beispielsweise die Drehachsen D der vorderen Räder 41 um eine in die Vertikalrichtung Z verlaufende Schwenkachse geschwenkt. Die Drehachsen D der vorderen Räder 41 verlaufen dann in eine horizontale Richtung, die relativ zu der Längsrichtung X und relativ zu der Querrichtung Y geneigt ist.

Das Transportfahrzeug umfasst eine hier nicht dargestellte Antriebseinheit zum Antrieb der Räder 41. Das Transportfahrzeug umfasst auch einen elektrischen Energiespeicher zur Versorgung der Antriebseinheit sowie eine Steuereinheit zur Steuerung der Antriebseinheit. Die Antriebseinheit umfasst beispielsweise einen Traktionsmotor und ein Getriebe und treibt einige der Räder 41 oder alle Räder 41 an. Das Transportfahrzeug weist auch eine hier nicht dargestellte Lenkeinrichtung zur Lenkung der Räder 41 auf. Die Lenkeinrichtung ist ebenfalls von der Steuereinheit ansteuerbar.

Das Transportfahrzeug umfasst auch eine in Figur 1 und Figur 2 dargestellte Hubvorrichtung 10. Dabei ist der Unterrahmen 30 der Hubvorrichtung 10 verschiebefest mit dem Grundrahmen 12 des Transportfahrzeugs verbunden. Vorliegend ist der Unterrahmen 30 unmittelbar an dem Grundrahmen 12 befestigt, insbesondere verschraubt. Die Anschlagelemente 28 der Hubvorrichtung 10 sind ebenfalls verschiebefest mit dem Grundrahmen 12 des Transportfahrzeugs verbunden.

Wenn der Elektromotor 21 die ersten Schwingen relativ zu den zweiten Schwingen um die Scherenachse schwenkt, so werden die Führungsstangen 26 relativ zu dem Unterrahmen 30 in die Vertikalrichtung Z bewegt. Auch werden dabei die Führungsbolzen 27 relativ zu den Anschlagelementen 28 in die Vertikalrichtung Z bewegt. Dadurch wird die die Empfangseinheit 20 relativ zu dem Grundrahmen 12 in die Vertikalrichtung Z bewegt.

Der elektrische Energiespeicher dient auch zur Versorgung der Hubvorrichtung 10. Die Steuereinheit dient auch zur Steuerung der Hubvorrichtung 10, insbesondere zur Ansteuerung des Elektromotors 21.

Das Transportfahrzeug umfasst auch eine Empfangseinheit 20, die an der Bodenplatte 25 der Hubvorrichtung 10 befestigt ist. Zu der Empfangseinheit 20 ist Energie induktiv von einer Ladeeinheit übertragbar. Die von der Ladeeinheit zu der Empfangseinheit 20 induktiv übertragene Energie dient beispielsweise zum Laden des elektrischen Energiespeichers des . Transportfahrzeugs. Mittels der Hubvorrichtung 10 ist die Empfangseinheit 20 relativ zu dem Grundrahmen 12 in die Vertikalrichtung Z bewegbar.

Die Empfangseinheit 20 umfasst einen Übertragerkopf, welcher eine Sekundärspule aufweist. Die Ladeeinheit ist beispielsweise als stromdurchflossener Primärleiter ausgebildet, welche in dem Boden 5 unter dem Transportfahrzeug verlegt ist. Die Ladeeinheit ist beispielsweise auch als stromdurchflossene Primärspule ausgebildet, welche in dem Boden 5 unter dem Transportfahrzeug verlegt ist. Die Ladeeinheit ist dabei nahe an der Oberfläche des Bodens 5 angeordnet. Die Sekundärspule des Übertragerkopfs der Empfangseinheit 20 ist mit der Ladeeinheit induktiv koppelbar.

In der hier gezeigten Darstellung ist der Abstand des Oberrahmens 40 zu dem Unterrahmen 30 in der Vertikalrichtung Z minimal. In der hier gezeigten Darstellung befindet sich die Bodenplatte 25 mit der Empfangseinheit 20 in einer unteren Endposition. Die Empfangseinheit 20 befindet sich somit in unmittelbarer Nähe des Bodens 5 über der Ladeeinheit. Insbesondere ist der Empfangseinheit 20 dabei derart angeordnet, dass die Sekundärspule mit der Ladeeinheit induktiv gekoppelt ist. Somit ist Energie von der Ladeeinheit zu der Empfangseinheit 20 übertragbar.

Das Transportfahrzeug umfasst einen hier nicht dargestellten Sensor zur Erkennung von Hindernissen auf dem Boden 5, auf welchem das Transportfahrzeug sich bewegt. Der Sensor ist beispielsweise als optische Kamera oder als Laserscanner ausgebildet. Wenn der Sensor ein Hindernis, beispielsweise einen Stein, auf einem vorgesehenen Fahrweg des Transportfahrzeugs erkannt, so sendet der Sensor ein entsprechendes Warnsignal an die Steuereinrichtung.

Wenn die Steuereinrichtung ein Warnsignal von dem Sensor empfängt, so steuert die Steuereinrichtung die Hubvorrichtung 10, insbesondere den Elektromotor 21, derart an, dass der Abstand des Oberrahmens 40 zu dem Unterrahmen 30 in der Vertikalrichtung Z vergrößert wird. Dadurch werden die Bodenplatte 25 und die Empfangseinheit 20 in die Vertikalrichtung Z von dem Boden 5 weg bewegt.

### Bezugszeichenliste

- 5: Boden
- 10: Hubvorrichtung
- 12: Grundrahmen
- 15: Scherengestell
- 20: Empfangseinheit
- 21: Elektromotor
- 25: Bodenplatte
- 26: Führungsstange
- 27: Führungsbolzen
- 28: Anschlagelement
- 30: Unterrahmen
- 40: Oberrahmen
- 41: Rad
- D: Drehachse
- X: Längsrichtung
- Y: Querrichtung
- Z: Vertikalrichtung

## Patentansprüche

1. Transportfahrzeug zum Transport von Gegenständen, umfassend
einen Grundrahmen (12),
eine Mehrzahl von Rädern (41) zur Bewegung des Transportfahrzeugs auf einem Boden (5), eine Antriebseinheit zum Antrieb der Räder (41) und
eine Empfangseinheit (20) zur induktiven Aufnahme von Energie, wobei
das Transportfahrzeug eine Hubvorrichtung (10) umfasst,
mittels welcher die Empfangseinheit (20) relativ zu dem Grundrahmen (12) in eine Vertikalrichtung (Z) bewegbar ist, und wobei
die Hubvorrichtung (10) einen Oberrahmen (40) und einen Unterrahmen (30) aufweist, und wobei
der Unterrahmen (30) verschiebefest mit dem Grundrahmen (12) verbunden ist, und
der Oberrahmen (40) verschiebefest mit der Empfangseinheit (20) verbunden ist,
**dadurch gekennzeichnet, dass**
die Hubvorrichtung (10) ein Scherengestell (15) aufweist, welches
ein Paar von ersten Schwingen und ein Paar von zweiten Schwingen,
welche sich an einer Scherenachse kreuzen und um die Scherenachse schwenkbar sind, umfasst, und
welches derart ausgebildet ist, dass
durch eine Schwenkbewegung der ersten Schwingen relativ zu den zweiten Schwingen um die Scherenachse ein Abstand des Oberrahmens (40) zu dem Unterrahmen (30) in der Vertikalrichtung (Z) sich ändert, und dass
die Hubvorrichtung (10) eine Bodenplatte (25) aufweist, welche verschiebefest mit dem Oberrahmen (40) und mit der Empfangseinheit (20) verbunden ist, und dass der Unterrahmen (30) in der Vertikalrichtung (Z) zwischen der Bodenplatte (25) und dem Oberrahmen (40) angeordnet ist, und dass
die Hubvorrichtung (10) mehrere Führungsstangen (26) aufweist, welche sich in die Vertikalrichtung (Z) erstrecken und mit dem Oberrahmen (40) und mit der Empfangseinheit (20) verschiebefest verbunden sind, und dass der Unterrahmen (30) entlang der Führungsstangen (26) in die Vertikalrichtung (Z) bewegbar ist.

2. Transportfahrzeug nach Anspruch 1, **dadurch gekennzeichnet, dass**
die Hubvorrichtung (10) einen Elektromotor (21) aufweist, welcher
die ersten Schwingen relativ zu den zweiten Schwingen um die Scherenachse schwenkt.

3. Transportfahrzeug nach einem der vorangegangenen Ansprüche, **dadurch gekennzeichnet, dass**
der Unterrahmen (30) in der Vertikalrichtung (Z) unter dem Oberrahmen (40) angeordnet ist,

4. Transportfahrzeug nach einem der vorangegangenen Ansprüche, **dadurch gekennzeichnet, dass**
der Oberahmen (40) in der Vertikalrichtung (Z) über dem Grundrahmen (12) angeordnet ist,

5. Transportfahrzeug nach einem der vorangegangenen Ansprüche,
**dadurch gekennzeichnet, dass**
das Transportfahrzeug einen elektrischen Energiespeicher zur Versorgung der Antriebseinheit und der Hubvorrichtung (10) umfasst, welcher
von der Empfangseinheit (20) mit elektrischer Energie versorgbar ist.

6. Transportfahrzeug nach einem der vorangegangenen Ansprüche,
**dadurch gekennzeichnet, dass**
das Transportfahrzeug als autonom fahrendes Transportfahrzeug ausgebildet ist und
eine Steuereinrichtung zur Steuerung der Antriebseinheit und der Hubvorrichtung (10) umfasst.

7. Transportfahrzeug nach Anspruch 6, **dadurch gekennzeichnet, dass**
**dadurch gekennzeichnet, dass**
das Transportfahrzeug einen Sensor zur Erkennung von Hindernissen auf einem Boden (5), auf welchem das Transportfahrzeug sich bewegt, umfasst,
welcher bei Erkennung eines Hindernisses auf einem vorgesehenen Fahrweg des Transportfahrzeugs ein Warnsignal an die Steuereinrichtung sendet.

8. Transportfahrzeug nach Anspruch 7, **dadurch gekennzeichnet, dass**
die Steuereinrichtung dazu eingerichtet ist, bei Empfang eines Warnsignals
die Hubvorrichtung (10) derart anzusteuern, dass
die Empfangseinheit (20) in die Vertikalrichtung (Z) von dem Boden (5) weg bewegt wird.

## Claims

1. A transport vehicle for transporting objects, comprising
a base frame (12),
a plurality of wheels (41) for moving the transport vehicle on ground (5),
a drive unit for driving the wheels (41), and
a receiving unit (20) for inductively picking up energy, wherein
the transport vehicle comprises a lifting device (10)
by means of which the receiving unit (20) can be moved in a vertical direction (Z) relative to the base frame (12), and wherein
the lifting device (10) has an upper frame (40) and a lower frame (30), and wherein
the lower frame (30) is connected non-displaceably to the base frame (12), and
the upper frame (40) is connected non-displaceably to the receiving unit (20),
**characterised in that**
the lifting device (10) has a scissors-type support (15) which comprises a pair of first arms and a pair of second arms
which cross at a scissor axis and are pivotable about the scissor axis,
and
which is formed in such a way that
by a pivoting movement of the first arms relative to the second arms about the scissor axis a distance of the upper frame (40) from the lower frame (30) in the vertical direction (Z) changes, and that
the lifting device (10) has a ground plate (25) which is connected non-displaceably to the upper frame (40) and to the receiving unit (20), and that
the lower frame (30) is arranged between the ground plate (25) and the upper frame (40) in the vertical direction (Z), and that
the lifting device (10) has a plurality of guide rods (26) which extend in the vertical direction (Z) and are connected non-displaceably to the upper frame (40) and to the receiving unit (20), and that the lower frame (30) can be moved along the guide rods (26) in the vertical direction (Z).

2. A transport vehicle according to claim 1, **characterised in that**
the lifting device (10) has an electric motor (21) which
pivots the first arms relative to the second arms about the scissor axis.

3. A transport vehicle according to one of the preceding claims, **characterised in that** the lower frame (30) is arranged under the upper frame (40) in the vertical direction (Z).

4. A transport vehicle according to one of the preceding claims, **characterised in that** the upper frame (40) is arranged over the base frame (12) in the vertical direction (Z).

5. A transport vehicle according to one of the preceding claims,
**characterised in that**
the transport vehicle comprises an electrical energy storage unit for supplying the drive unit and the lifting device (10) which
can be supplied with electric power from the receiving unit (20).

6. A transport vehicle according to one of the preceding claims,
**characterised in that**
the transport vehicle takes the form of an autonomously driving transport vehicle, and comprises a control means for controlling the drive unit and the lifting device (10).

7. A transport vehicle according to claim 6, **characterised in that**
**characterised in that**
the transport vehicle comprises a sensor for detecting obstacles on ground (5) on which the transport vehicle is moving,
which sensor, on detecting an obstacle on an intended route of the transport vehicle, sends a warning signal to the control means.

8. A transport vehicle according to claim 7, **characterised in that**
the control means is configured, on receiving a warning signal,
to actuate the lifting device (10) in such a way that
the receiving unit (20) is moved away from the ground (5) in the vertical direction (Z).

## Revendications

1. Véhicule de transport pour le transport d'objets, comprenant
un cadre de base (12),
une pluralité de roues (41) pour le déplacement du véhicule de transport sur un sol (5),
une unité d'entraînement pour l'entraînement des roues (41) et
une unité de réception (20) pour la réception inductive d'énergie,
dans lequel le véhicule de transport comprend un dispositif de levage (10),
au moyen duquel l'unité de réception (20) est mobile relativement au cadre de base (12) dans une direction verticale (Z), et dans lequel
le dispositif de levage (10) présente un cadre supérieur (40) et un cadre inférieur (30), et
dans lequel
le cadre inférieur (30) est relié de manière fixe en translation au cadre de base (12), et
le cadre supérieur (40) est relié de manière fixe en translation à l'unité de réception (20), **caractérisé en ce que**
le dispositif de levage (10) présente un châssis à ciseaux (15), lequel comprend
une paire de premiers bras oscillants et une paire de seconds bras oscillants,
lesquels se croisent sur un axe de ciseaux et sont pivotants autour de l'axe de ciseaux, et
lequel est conçu de telle sorte que
par un mouvement de pivotement des premiers bras oscillants relativement aux seconds bras oscillants autour de l'axe de ciseaux, une distance du cadre supérieur (40) au cadre inférieur (30) dans la direction verticale (Z) change, et que
le dispositif de levage (10) présente une plaque de base (25), laquelle est reliée de manière fixe en translation au cadre supérieur (40) et à l'unité de réception (20), et que
le cadre inférieur (30) est disposé dans la direction verticale (Z) entre la plaque de base (25) et le cadre supérieur (40), et que
le dispositif de levage (10) présente plusieurs tiges de guidage (26), lesquelles s'étendent dans la direction verticale (Z) et sont reliées de manière fixe en translation au cadre supérieur (40) et à l'unité de réception (20), et que le cadre inférieur (30) est mobile le long des tiges de guidage (26) dans la direction verticale (Z).

2. Véhicule de transport selon la revendication 1, **caractérisé en ce que** le dispositif de levage (10) présente un moteur électrique (21), lequel fait pivoter les premiers bras oscillants relativement aux seconds bras oscillants autour de l'axe de ciseaux.

3. Véhicule de transport selon l'une des revendications précédentes, **caractérisé en ce que** le cadre inférieur (30) est disposé dans la direction verticale (Z) sous le cadre supérieur (40),

4. Véhicule de transport selon l'une des revendications précédentes, **caractérisé en ce que** le cadre supérieur (40) est disposé dans la direction verticale (Z) au-dessus du cadre de base (12),

5. Véhicule de transport selon l'une des revendications précédentes, **caractérisé en ce que** le véhicule de transport comprend un accumulateur d'énergie électrique pour l'alimentation de l'unité d'entraînement et du dispositif de levage (10), lequel peut être alimenté en énergie électrique par l'unité de réception (20).

6. Véhicule de transport selon l'une des revendications précédentes, **caractérisé en ce que** le véhicule de transport est conçu comme un véhicule de transport autonome et comprend un dispositif de commande pour la commande de l'unité d'entraînement et du dispositif de levage (10).

7. Véhicule de transport selon la revendication 6, **caractérisé en ce que**
le véhicule de transport comprend un capteur pour la détection d'obstacles sur un sol (5), sur lequel le véhicule de transport se déplace,
lequel, lors de la détection d'un obstacle sur un trajet prévu du véhicule de transport, envoie un signal d'alerte au dispositif de commande.

8. Véhicule de transport selon la revendication 7, **caractérisé en ce que** le dispositif de commande est conçu pour commander, lors de la réception d'un signal d'alerte, le dispositif de levage (10) de telle sorte que l'unité de réception (20) soit déplacée dans la direction verticale (Z) à l'écart du sol (5).
